# EUROPEAN PATENT APPLICATION

(11) **EP 3 217 320 A1**
(43) Date of publication of application: **13.09.2017**
(21) Application number: 17159564.8
(22) Date of filing: 07.03.2017
(51) Int. Cl.: G06K 9/00

(54) **PERSON VERIFICATION SYSTEM AND PERSON VERIFICATION METHOD**

(30) Priority: 07.03.2016 JP 2016043672
(71) Applicant: Kabushiki Kaisha Toshiba, Minato-ku, Tokyo (JP)
(72) Inventor: Saito, Kota, Tokyo (JP); Saito, Hiroo, Tokyo (JP); Sukegawa, Hiroshi, Tokyo (JP)
(74) Representative: Hoffmann Eitle

(57) **Abstract**

A person verification system includes an imaging unit, a reading unit, a storage unit, a selecting unit, and a determination unit. The imaging unit images a target person trying to pass through a first gate. The reading unit reads personal information including an image of a person indicated by identification and attributes of the person, from the identification held by the target person. The storage unit stores plural algorithms, each algorithm is provided for each of the attributes of the person. The selecting unit selects the algorithm for each of the attributes that are included in the personal information, from the storage unit. The determination unit calculates the degree of similarity between the captured image and the image included in the personal information, in accordance with the algorithm selected, and determines whether or not the target person is the person indicated by the identification using the degree of similarity calculated.

## Description

### Technical Field

Embodiments of the present invention relate to a person verification system and a person verification method.

### Background Art

There is a person verification system for performing person verification that calculates a degree of similarity between a captured image obtained by imaging a person passing through a gate and an image included in personal information read from an identification held by the person, and determines that the person passing through the gate is the person indicated by the person information read from the identification when the degree of similarity calculated is equal to or greater than a predetermined threshold.

In a conventional technique, the person verification is performed in accordance with a singular algorithm regardless of attributes of the person passing through the gate, such as a gender, an age, and a race. For this reason, there may be a case in which unnecessary processing is also performed depending on the attributes of the person passing through the gate, and it takes time to perform the person verification.

### Brief Description of Drawings

Fig. 1 is a diagram illustrating an example of a configuration of a person verification system according to a first embodiment;
Fig. 2 is a flowchart illustrating an example of a flow of calculation processing of a degree of similarity in the person verification system according to the first embodiment;
Fig. 3 is a flowchart illustrating an example of a flow of person verification processing in the person verification system according to the first embodiment;
Fig. 4 is a diagram illustrating an example of the flow of the person verification processing in the person verification system according to the first embodiment;
Fig. 5 is a diagram illustrating an example of a configuration of a person verification system according to a second embodiment;
Fig. 6 is a diagram for describing an example of processing for changing an imaging condition of a target person imaging unit and a waiting person imaging unit included in the person verification system according to the second embodiment;
Fig. 7 is a diagram for describing an example of the processing for changing the imaging condition of the target person imaging unit and the waiting person imaging unit included in the person verification system according to the second embodiment;
Fig. 8 is a flowchart illustrating an example of a flow of person verification processing in the person verification system according to the second embodiment; and
Fig. 9 is a diagram illustrating an example of a configuration of a person verification system according to a third embodiment.

### Description of Embodiments

A person verification system of an embodiment includes an imaging unit, a reading unit, a storage unit, a selecting unit, and a determination unit. The imaging unit is provided to be capable of imaging a target person trying to pass through a first gate. The reading unit is provided to be capable of reading personal information including an image of a person indicated by an identification and attributes of the person, from the identification held by the target person. The storage unit stores an algorithm for each of the attributes, the algorithm including processing for calculating a degree of similarity between a captured image obtained by imaging the target person and the image included in the personal information, for each of the attributes of the person. The selecting unit selects the algorithm for each of the attributes that are included in the personal information read, from the storage unit. The determination unit executes person verification processing that calculates the degree of similarity between the captured image obtained by imaging by the imaging unit and the image included in the personal information read, in accordance with the algorithm selected, determines that the target person is the person indicated by the identification when the degree of similarity calculated is equal to or greater than a predetermined threshold, and determines that the target person is not the person indicated by the identification when the degree of similarity calculated is less than the predetermined threshold.

Hereinafter, the person verification system and a person verification method according to the embodiment will be described with reference to accompanying drawings.

### (First Embodiment)

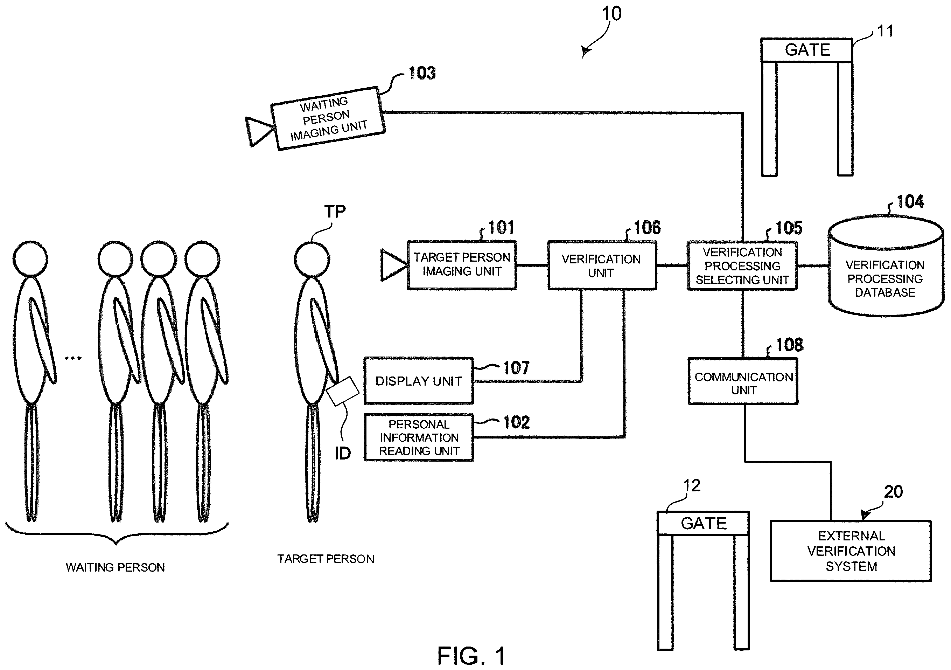

Fig. 1 is a diagram illustrating an example of a configuration of a person verification system according to a first embodiment. A person verification system 10 according to the present embodiment is installed at a gate 11 for managing entering a room and the like. The person verification system 10 is a system that performs person verification processing for determining whether or not a person (hereinafter, referred to as a target person TP) trying to pass through the gate 11 coincides with a person indicated by an identification ID held by the target person TP.

As illustrated in Fig. 1, the person verification system 10 according to the present embodiment includes a target person imaging unit 101, an personal information reading unit 102, a waiting person imaging unit 103, a verification processing database (DB) 104, a verification processing selecting unit 105, a verification unit 106, a display unit 107, and a communication unit 108.

The person verification system 10 includes a central processing unit (CPU), and a storage device such as a hard disk drive (HDD) or read only memory (ROM) storing a program. The CPU executes the program, thereby functioning as the verification processing selecting unit 105 and the verification unit 106, and controlling predetermined hardware to function as the target person imaging unit 101, the personal information reading unit 102, the waiting person imaging unit 103, the verification processing database (DB) 104, the display unit 107, and the communication unit 108.

The target person imaging unit 101 (an example of the imaging unit) is an imaging unit provided to be capable of imaging the person trying to pass through a gate in which the person verification system is installed (an example of the first gate 11). In the present embodiment, the target person imaging unit 101 is provided to be capable of imaging at least the target person TP who is the first person of persons (hereinafter, referred to as waiting persons TP) waiting for person verification at the gate.

The personal information reading unit 102 (an example of the reading unit) reads personal information including an image of the person indicated by the identification ID and attributes of the person, from the identification ID held by the target person TP.

The waiting person imaging unit 103 is provided to be capable of imaging the waiting persons.

The verification processing database 104 (an example of the storage unit) is a storage unit for storing an algorithm that is the algorithm for each of the attributes and includes the person verification processing, for each of the attributes of the person. Here, the person verification processing includes processing for calculating a degree of similarity between a captured image obtained by imaging by the target person imaging unit 101 and an image included in the personal information read from the identification ID by the personal information reading unit 102. The algorithms for each of the attributes stored in the verification processing database 104 may be different from each other for each of the attributes of the person, and some parts of algorithms may be the same as a part of the algorithm for another attribute.

The verification processing selecting unit 105 (an example of the selecting unit) selects the algorithm for each of the attributes of the person included in the personal information read from the identification ID, from the verification processing database 104.

The verification unit 106 (an example of the determination unit) executes the person verification processing. Specifically, the verification unit 106 calculates the degree of similarity between the captured image obtained by imaging by the target person imaging unit 101 and the image included in the personal information read by the personal information reading unit 102, in accordance with the algorithm selected by the verification processing selecting unit 105. Then, the verification unit 106 determines that the target person TP is the person indicated by the identification ID when the degree of similarity calculated is equal to or greater than a predetermined threshold, in accordance with the algorithm selected.

Here, the predetermined threshold is a value for determining that the captured image and the image included in the personal information are similar to each other. In the present embodiment, the predetermined threshold is a value that meets a false acceptance rate and a false rejection rate. The false acceptance rate is a rate at which the target person TP is permitted to pass through the gate as being the person indicated by the identification ID even though the target person TP is not the identification holder, by a benchmark test of the person verification processing. The false rejection rate is a rate at which the target person TP is prohibited from passing through the gate as not being the person indicated by the identification ID even though the target person TP is the identification holder, by the benchmark test of the person verification processing.

The verification unit 106 determines that the target person TP is not the person indicated by the identification ID when the degree of similarity calculated is less than the predetermined threshold.

Thus, in the verification unit 106, depending on attributes of the person trying to pass through the gate, the verification processing is executed in accordance with the algorithm for each of the attributes, and unnecessary processing is not performed, whereby the person verification processing can be efficiently performed.

The display unit 107 is capable of displaying various types of information such as a result of the person verification processing by the verification unit 106. The communication unit 108 transmits to another gate a processing status of the person verification processing or an operation status (for example, active, inactive) of the person verification system. In addition, the communication unit 108 receives from the other gate a processing status or an operation status of the other gate executing the person verification processing.

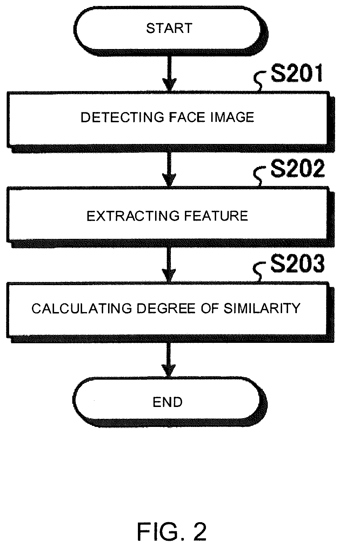

Next, details will be described of each unit included in the person verification system according to the present embodiment with reference to Fig. 1 and Fig. 2. Fig. 2 is a flowchart illustrating an example of a flow of calculation processing of a degree of similarity in the person verification system according to the first embodiment.

The target person imaging unit 101 includes a camera that is installed at a height of a face of a person having an average height of a person having nationality of a country in which the person verification system 10 is installed, and images the face of the target person TP. The target person imaging unit 101 images the target person TP positioned in front of the target person imaging unit 101.

The personal information reading unit 102 is installed in a range in which a hand of the target person TP can reach from a standing position of the target person TP, and reads the personal information from the identification ID positioned within the range. The personal information reading unit 102 includes a reader capable of communicating with the identification ID, for example. It is sufficient that the identification ID is a medium capable of storing the personal information, such as a passport, a driver's license, or a My Number card. The personal information of the identification ID includes a face image of the person and the attributes of the person.

The waiting person imaging unit 103 includes a camera that is provided above the target person imaging unit 101, and images the waiting persons. In addition, the waiting person imaging unit 103 counts the number of persons of the waiting persons imaged. In the present embodiment, the waiting person imaging unit 103 is provided above the target person imaging unit 101, however, it is sufficient that the waiting person imaging unit 103 is provided to be capable of imaging a front of the waiting persons.

The verification processing database 104 stores the algorithm that is an algorithm for each of the attributes such as nationality, and a gender of the person, and includes the person verification processing. The verification processing database 104 includes a ROM or a hard disk drive (HDD), for example. Here, the attributes include an age, and a color of skin, besides nationality, and a gender of the person. The verification processing database 104 stores the algorithms as many as the number of attribute combinations.

The verification processing selecting unit 105 selects the algorithm for each of the attributes included in the personal information read by the personal information reading unit 102, from the verification processing database 104. In the present embodiment, the verification processing selecting unit 105 selects the algorithm assigned to a terminal node by using a decision tree in which the attributes of the person set in advance are branch nodes. In addition, the verification processing selecting unit 105 repeats the predetermined number of times selection of the algorithm that is the algorithm for each of the attributes included in the personal information read and is different from the algorithm selected, from the verification processing database 104, until it is determined by the verification unit 106 that the target person TP is the person indicated by the identification ID. Here, the predetermined number of times is the number of times (for example, 10 times) set in advance, and is changed depending on the processing status of the other gate.

The verification unit 106 calculates the degree of similarity between the captured image obtained by imaging by the target person imaging unit 101 and the image (for example, the face image) included in the personal information read by the personal information reading unit 102, in accordance with the algorithm selected, and executes the person verification processing for determining whether or not the target person TP is the person indicated by the identification ID depending on whether or not the degree of similarity calculated is equal to or greater than the predetermined threshold. In the present embodiment, the verification unit 106 executes the person verification processing by using the face image included in the personal information read by the personal information reading unit 102. However, the verification unit 106 may acquire the image of the person indicated by the personal information from an external device such as a server connected to the person verification system via a network, and execute the person verification processing by using the image acquired.

Specifically, as illustrated in Fig. 2, first, the verification unit 106 detects the face image from the captured image obtained by imaging by the target person imaging unit 101 (step S201). For example, the verification unit 106 prepares in advance an average image of a rectangular area in multiple sample face images, as a template. Then, the verification unit 106 performs scanning by moving in parallel, rotating, enlarging, or reducing the template, in the captured image obtained by imaging by the target person imaging unit 101. Then, the verification unit 106 detects an image in which a difference of the luminance value from the template is the smallest in the captured image, as the face image of the target person TP.

Then, the verification unit 106 extracts a feature of the face image detected (step S202). For example, the verification unit 106 enlarges or reduces the face image detected to a rectangular area of m pixels × n pixels, and sets the luminance value of the rectangular area as an m × n dimensional feature vector. In addition, the verification unit 106 extracts a feature vector also from the face image included in the personal information read by the personal information reading unit 102, similarly. Alternatively, the verification unit 106 may acquire the feature vector of the face image of the person indicated by the personal information read by the personal information reading unit 102, from an external device such as a server connected to the person verification system via a network.

Next, the verification unit 106 calculates a degree of similarity between the feature vector of the face image included in the captured image and the feature vector of the face image included in the personal information read by the personal information reading unit 102 (step S203).

Then, the verification unit 106 determines that the target person TP is the person indicated by the identification ID when the degree of similarity calculated is equal to or greater than the predetermined threshold. The verification unit 106 determines that the target person TP is not the person indicated by the identification ID when the degree of similarity calculated is less than the predetermined threshold.

The display unit 107 includes a liquid crystal display (LCD) capable of displaying the various types of information such as the result of the person verification processing by the verification unit 106. The display unit 107 may display the result of the person verification processing by text, and may display the result of the person verification processing by a symbol such as ○, ×, or an arrow, a graphic, an animation, or the like.

The communication unit 108 includes a transceiver, for example. When the person verification system is not in operation due to a cause such as a failure of the gate in which the person verification system is installed, the communication unit 108 transmits the fact that the person verification system is inactive as the operation status of the person verification system to an external device such as another person verification system (hereinafter, referred to as an external person verification system 20) installed at the other gate (an example of the second gate 12). When the person verification system 10 is executing the person verification processing, the communication unit 108 transmits the fact that the person verification system 10 is in operation as the operation status of the person verification system 10 to the external person verification system 20. In addition, the communication unit 108 transmits the number of persons of the waiting persons waiting for the person verification processing at the gate in which the person verification system 10 is installed, as the processing status of the person verification processing to the external person verification system 20. Further, the communication unit 108 receives the operation status and the processing status from the external person verification system 20.

The verification processing selecting unit 105 decides the predetermined number of times depending on the number of persons waiting indicated by the processing status received from the external person verification system 20. Specifically, the verification processing selecting unit 105 reduces the predetermined number of times when the number of persons waiting indicated by the processing status received from the external person verification system 20 is less than the number of persons of the waiting persons at the gate 11 in which the person verification system 10 is installed. Alternatively, the verification processing selecting unit 105 may increase the predetermined threshold. Thus, the target person TP who is difficult to determine as the person indicated by the identification ID by the person verification processing can be moved to a manned gate early, so that efficiency of the person verification processing can be improved. For example, the verification processing selecting unit 105 reduces the predetermined number of times by the amount of difference between the number of persons of the waiting persons indicated by the processing status received from the external person verification system 20 and the number of persons of the waiting persons waiting for the person verification processing at the gate in which the person verification system 10 is installed.

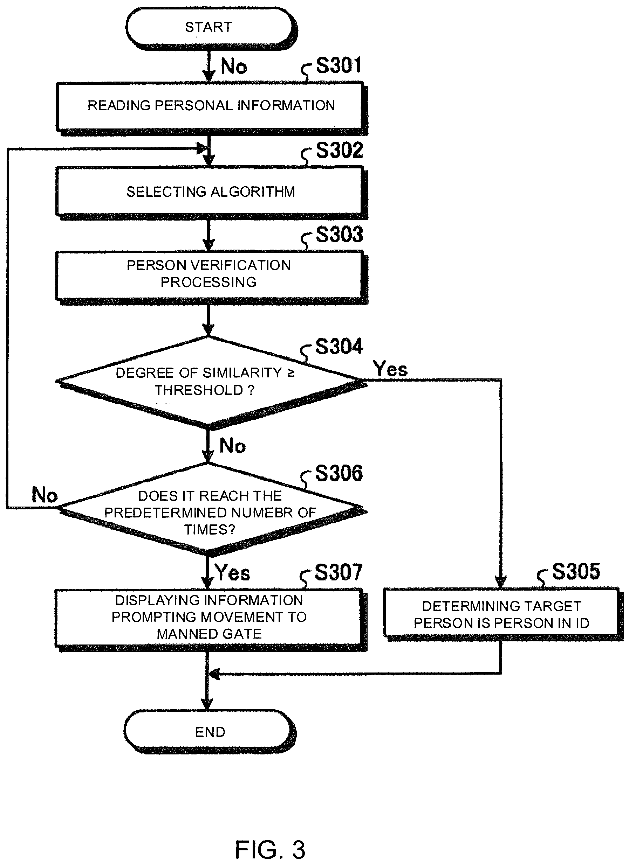

Next, a flow will be described of the person verification processing in the person verification system according to the present embodiment, with reference to Fig. 3. Fig. 3 is a flowchart illustrating an example of a flow of person verification processing in the person verification system according to the first embodiment;

The personal information reading unit 102 reads the personal information from the identification ID held by the target person TP (step S301). The verification processing selecting unit 105 acquires the attributes (for example, the nationality, gender, and age) indicated by the personal information read by the personal information reading unit 102. Then, the verification processing selecting unit 105 selects the algorithm for each of the attributes acquired, from the verification processing database 104 (step S302). The verification unit 106 executes the person verification processing in accordance with the algorithm selected by the verification processing selecting unit 105 (step S303). When the degree of similarity calculated by the person verification processing is equal to or greater than the threshold (step S304: Yes), the verification unit 106 determines that the target person TP is the person (the identification holder) indicated by the Identification ID (step S305).

On the other hand, when the degree of similarity calculated by the person verification processing is less than the threshold (step S304: No), the verification unit 106 determines whether or not the selection of the algorithm has been performed the predetermined number of times (step S306). When the selection of the algorithm has not been performed the predetermined number of times (step S306: No), the verification processing selecting unit 105 returns to step S302, and reselects an algorithm that is the algorithm for each of the attributes indicated by the identification holder information read from the identification ID and is other than the algorithm selected. On the other hand, when the selection of the algorithm has been performed the predetermined number of times (step S306: Yes), the display unit 107 displays information prompting movement to the other gate (for example, the manned gate) (step S307). When the selection of the algorithm has been performed the predetermined number of times (step S306: Yes), the verification unit 106 prohibits the target person TP from passing through the gate 11 by closing the gate 11 or the like.

The verification unit 106 is capable of executing impersonation determination processing for determining whether or not the target person TP has impersonated the person indicated by the identification ID, prior to the person verification processing. In the present embodiment, the verification unit 106 performs impersonation determination on the basis of the captured image obtained by imaging by the target person imaging unit 101. Specifically, the verification unit 106 determines that the target person TP has impersonated the person indicated by the identification ID when it is detected that, for example, the target person TP has caused the target person imaging unit 101 to capture a photograph, an image displayed on a tablet terminal, or the like, the target person TP has been disguised with an artifact, or the target person TP has moved, on the basis of the captured image. When it is determined that the target person TP has impersonated the person indicated by the identification ID, the verification unit 106 does not execute the person verification processing. Thus, the target person TP having impersonated the person indicated by the identification ID can be prevented from passing through the gate, so that security can be improved. Then, the display unit 107 displays the information prompting movement to the other gate (for example, the manned gate).

Further, the verification unit 106 may stop the person verification processing and determine that the target person TP is not the person indicated by the identification ID when the degree of similarity calculated by the person verification processing is less than a second threshold less than the predetermined threshold by a predetermined value. Thus, the person verification processing is stopped when the degree of similarity calculated by the person verification processing is less than the second threshold and there is a high possibility that the target person TP is not the person indicated by the identification ID, so that the person verification processing can be efficiently performed. Also in this case, the display unit 107 displays the information prompting movement to the other gate.

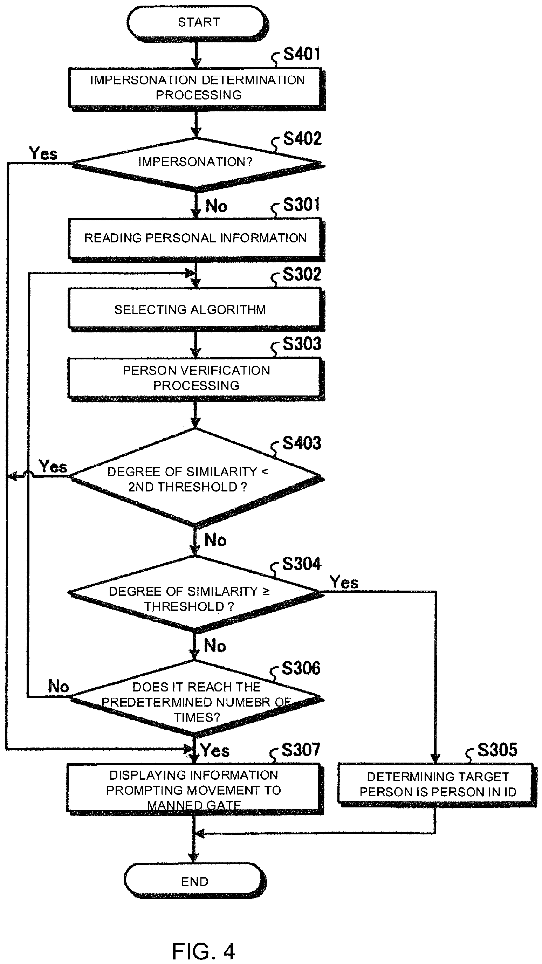

Fig. 4 is a diagram illustrating an example of the flow of the person verification processing in the person verification system according to the first embodiment. In the following description, the description will be omitted of the processing similar to that of the person verification processing illustrated in Fig. 3. As illustrated in Fig. 4, when imaging is performed by the target person imaging unit 101, the verification unit 106 executes the impersonation determination processing, prior to the person verification processing (step S401). When it is determined that the target person TP has impersonated the person indicated by the identification ID (step S402: Yes), the verification unit 106 prohibits the person verification processing from being executed. Then, the display unit 107 displays the information prompting movement to the other gate (step S307).

When the degree of similarity is calculated between the captured image obtained by imaging by the target person imaging unit 101 and the image included in the personal information read from the identification ID, the verification unit 106 determines whether or not the degree of similarity is less than the second threshold, first (step S403). When the degree of similarity calculated is less than the second threshold (step S403: Yes), the verification unit 106 stops the person verification processing, and determines that the target person TP imaged by the target person imaging unit 101 is not the person indicated by the identification ID.

On the other hand, when it is determined that the degree of similarity calculated is not less than the second threshold (step S403:No), the verification unit 106 continues the person verification processing, and determines whether or not the degree of similarity calculated is equal to or greater than the predetermined threshold (step S304).

In this way, with the person verification system according to the first embodiment, the person verification processing can be efficiently performed.

### (Second Embodiment)

The present embodiment is an example in which an imaging condition of a target person imaging unit is changed when a degree of similarity between a captured image obtained by imaging a target person and an image included in personal information read from identification ID is less than a predetermined threshold, and the number of times of repeating selection of an algorithm is equal to or less than the predetermined number of times. In the following description, the description will be omitted of a configuration similar to that of the first embodiment.

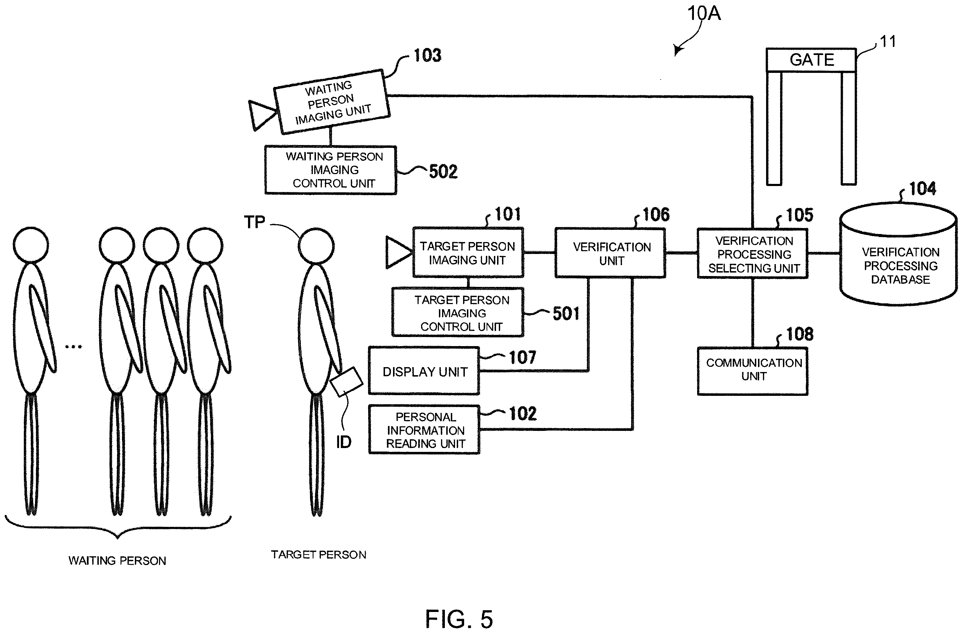

Fig. 5 is a diagram illustrating an example of a configuration of an person verification system 10A according to a second embodiment. As illustrated in Fig. 5, the person verification system 10A according to the present embodiment includes a target person imaging control unit 501, and a waiting person imaging control unit 502, in addition to the target person imaging unit 101, identification holder information reading unit 102, waiting person imaging unit 103, verification processing database (DB) 104, verification processing selecting unit 105, verification unit 106, display unit 107, and communication unit 108. The target person imaging control unit 501 changes the imaging condition of the target person imaging unit 101, such as a position or orientation of the target person imaging unit 101. The waiting person imaging control unit 502 changes the imaging condition of the waiting person imaging unit 103, such as a position or orientation of the waiting person imaging unit 103. A CPU executes a program, thereby controlling predetermined hardware to function as the target person imaging control unit 501 and the waiting person imaging control unit 502.

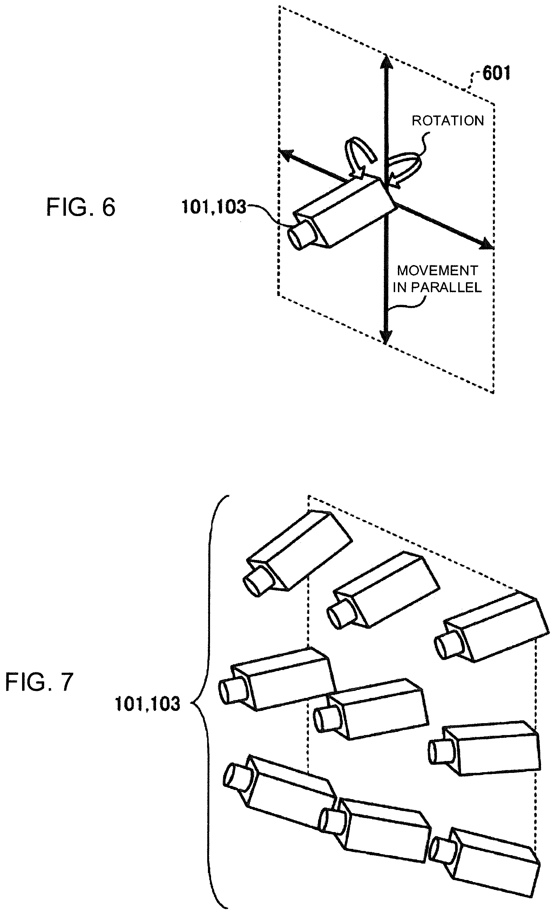

Each of Fig. 6 and Fig. 7 is a diagram for describing an example of processing for changing the imaging condition of a target person imaging unit and a waiting person imaging unit included in the person verification system according to the second embodiment. In the following description, an example will be described of changing the imaging condition of the target person imaging unit 101, however, the imaging condition of the waiting person imaging unit 103 can also be changed similarly.

For example, the target person imaging unit 101 is fixed to a camera platform that is capable of changing the position or orientation of the target person imaging unit 101 (that is, capable of changing the imaging condition), and includes at least one lighting device capable of emitting light to an imaging range of the target person imaging unit 101. When it is determined that the degree of similarity calculated by person verification processing is less than a predetermined threshold, the target person imaging control unit 501 rotates the target person imaging unit 101, and/or moves the target person imaging unit 101 in parallel within an operation plane 601 set in advance, as illustrated in Fig. 6. When the target person imaging unit 101 includes multiple cameras, the target person imaging control unit 501 changes the imaging condition of the target person imaging unit 101 by selecting the camera to be used for imaging from the multiple cameras, as illustrated in Fig. 7.

When it is determined that the degree of similarity calculated by the person verification processing is less than the predetermined threshold, the target person imaging control unit 501 rotates a lighting device included in the target person imaging unit 101, and/or moves the lighting device in parallel within a plane set in advance. Thus, the target person imaging control unit 501 changes the imaging condition of the target person imaging unit 101. When the target person imaging unit 101 includes multiple lighting devices, the target person imaging control unit 501 may rotate at least one lighting device of the multiple lighting devices, and/or move the lighting device in parallel within the plane set in advance.

When it is determined that the degree of similarity calculated by the person verification processing is less than the predetermined threshold, the target person imaging control unit 501 may display information for instructing change of a standing position of the target person TP, or change of an orientation of the face of the target person TP and the like, on the display unit 107, and change the imaging condition of the target person imaging unit 101.

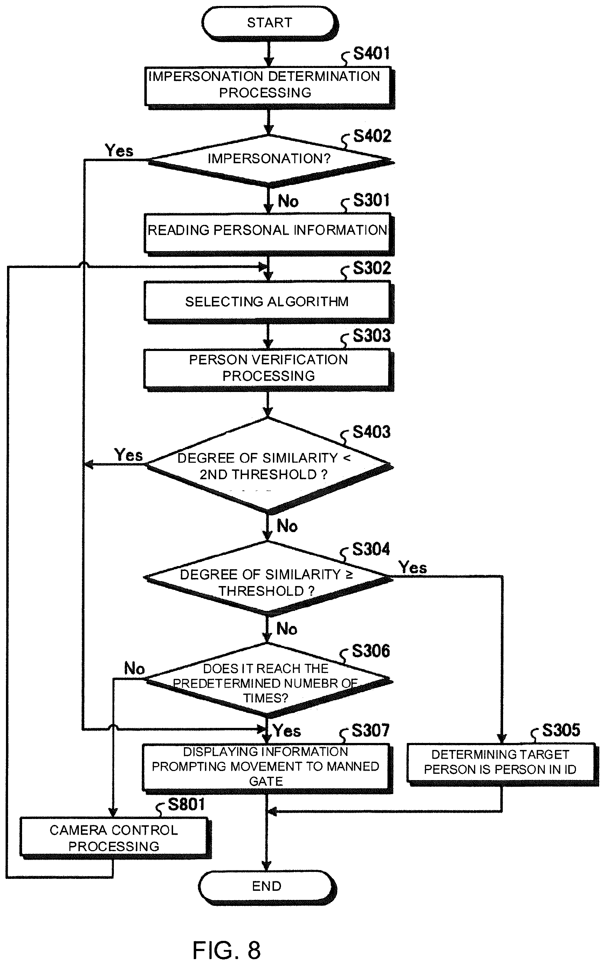

Fig. 8 is a flowchart illustrating an example of a flow of person verification processing in the person verification system 10A according to the second embodiment. In the following description, the description will be omitted of the processing similar to that of the person verification processing illustrated in Fig. 4. As illustrated in Fig. 8, when the degree of similarity calculated by the person verification processing is less than the predetermined threshold (step S304: No) and the selection of the algorithm has not been repeated the predetermined number of times (step S306: No), the target person imaging control unit 501 executes camera control processing for changing the imaging condition of the target person imaging unit 101, on the basis of the degree of similarity calculation result (step S801). Then, the verification unit 106 selects a captured image obtained by imaging after execution of the camera control processing, of the captured images obtained by imaging by the target person imaging unit 101. Then, the verification unit 106 executes the person verification processing for calculating the degree of similarity between the captured image selected and the image included in the personal information read from the identification ID, in accordance with the algorithm reselected (step S303).

The verification unit 106 includes a function for calculating a value (hereinafter, referred to as an evaluation value) indicating whether the imaging condition such as the position of the target person imaging unit 101, brightness of the imaging range of the target person imaging unit 101, or the like is suitable for imaging the target person TP, on the basis of the captured image obtained by imaging by the target person imaging unit 101. For example, the verification unit 106 calculates as an evaluation value a difference between a position of the center of gravity of a face image detected from the captured image obtained by imaging by the target person imaging unit 101 and a position of the center of gravity of a face image detected from the image included in the personal information read from the identification ID. In addition, the verification unit 106 calculates as an evaluation value a difference between an average of a luminance value of the face image detected from the captured image obtained by imaging by the target person imaging unit 101 and an average of a luminance value of the face image detected from the image included in the personal information read from the identification ID. Then, the target person imaging control unit 501 and the waiting person imaging control unit 502 change the imaging condition of the target person imaging unit 101 and the waiting person imaging unit 103, on the basis of the evaluation value calculated.

In this way, with the person verification system according to the second embodiment, the verification processing can be executed by using the captured image obtained by imaging the target person TP under the optimal imaging condition, so that verification accuracy can be improved of the person verification processing.

### (Third Embodiment)

The present embodiment is an example in which a waiting person image storage unit is included for storing for a predetermined period a captured image obtained by imaging by a waiting person imaging unit, and person verification processing is executed by using the captured image stored in the waiting person image storage unit. In the following description, the description will be omitted of a part similar to that of the second embodiment.

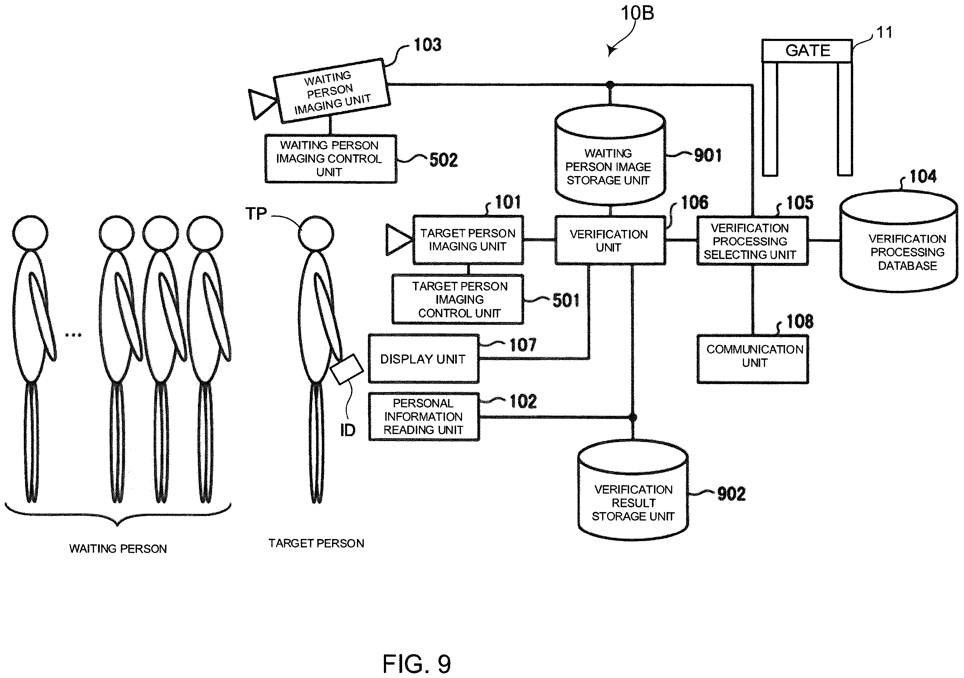

Fig. 9 is a diagram illustrating an example of a configuration of an person verification system according to a third embodiment. As illustrated in Fig. 9, an person verification system according to the present embodiment includes a waiting person image storage unit 901, and verification result storage unit 902, in addition to the target person imaging unit 101, personal information reading unit 102, waiting person imaging unit 103, verification processing database (DB) 104, verification processing selecting unit 105, verification unit 106, display unit 107, communication unit 108, target person imaging control unit 501, and waiting person imaging control unit 502. A CPU executes a program, thereby controlling predetermined hardware to function as the waiting person image storage unit 901 and the verification result storage unit 902.

The waiting person image storage unit 901 stores a captured image of a waiting person obtained by imaging by the waiting person imaging unit 103 for a predetermined period from when the captured image is obtained. Here, the predetermined period is a time longer than a time required from when the waiting person starts waiting for passing through a gate to when the person verification processing is executed for the waiting person. The verification result storage unit 902 stores a result of the person verification processing (hereinafter, referred to as a verification processing result). Here, the verification processing result includes a feature vector of a face image detected from the captured image used for the person verification processing, an algorithm used for the person verification processing, and personal information read from identification ID. In addition, the verification result storage unit 902 stores the number of times of displaying information prompting movement to another gate (hereinafter, referred to as the number of times of movement) by the person verification processing, for a person indicated by the personal information, in association with the personal information read from the identification ID by the personal information reading unit 102. Each of the waiting person image storage unit 901 and the verification result storage unit 902 includes an HDD or RAM, for example.

In the present embodiment, the verification unit 106 detects the face image from the captured image stored in the waiting person image storage unit 901, and extracts the feature vector of the face image detected, prior to the person verification processing. Then, the verification unit 106 calculates a degree of similarity between the feature vector of the face image included in the captured image stored in the waiting person image storage unit 901 and the feature vector of the face image included in the personal information read by the personal information reading unit 102, in the person verification processing. Thus, a time can be omitted required for extracting the feature vector from the captured image obtained by imaging by the target person imaging unit 101, during the person verification processing, so that a time can be reduced required for the person verification processing.

In addition, in the present embodiment, when the verification processing result is stored in association with the personal information read from the identification ID by the personal information reading unit 102 in the verification result storage unit 902, the verification unit 106 calculates the degree of similarity between the feature vector included in the verification processing result and the feature vector of the image included in the personal information read from the identification ID. Then, the verification unit 106 determines whether or not the target person TP is the person indicated by the identification ID, on the basis of whether or not the degree of similarity calculated is equal to or greater than a predetermined threshold. In this case, the verification unit 106 does not perform detection of the face image or extraction of the feature of the face image from the captured image obtained by imaging by the target person imaging unit 101. Thus, it is not necessary to perform detection of the face image or extraction of the feature of the face image from the captured image obtained by imaging by the target person imaging unit 101 in the person verification processing when the verification processing result is stored in the verification result storage unit 902, so that the person verification processing can be efficiently performed.

For example, when the same person tries to pass through the gate again on the same day, the verification unit 106 calculates the degree of similarity between the feature vector included in the verification processing result stored in the verification result storage unit 902 and the feature vector of the image included in the personal information read from the Identification ID. Then, the verification unit 106 determines that the target person TP is the person indicated by the identification ID when the degree of similarity calculated is equal to or greater than the predetermined threshold, and determines that the target person TP is not the person indicated by the identification ID when the degree of similarity calculated is less than the predetermined threshold.

Further, the verification unit 106 acquires the number of times of movement stored in association with the personal information read from the identification ID by the personal information reading unit 102, from the verification result storage unit 902, prior to the person verification processing. When the number of times of movement acquired is equal to or greater than the predetermined number of times, the verification unit 106 determines that it is difficult to determine whether or not the target person TP is the person indicated by the identification ID by the person verification processing. Here, the predetermined number of times may be a fixed number of times (for example, ten times) set in advance, and may be an arbitrarily changeable number of times. Then, the display unit 107 displays information indicating fact that it is difficult to determine whether or not the target person TP is the person indicated by the identification ID by the person verification processing. In addition, the verification unit 106 acquires the total number of times by which the information for prompting movement to another gate is displayed by all the person verification processing so far for the person indicated by the personal information read from the identification ID, as the number of times of movement, from the verification result storage unit 902. Alternatively, the verification unit 106 may acquire the total number of times by which the information for prompting movement to another gate is displayed in the most recent predetermined number of times of person verification processing for the person indicated by the personal information read from the identification ID, as the number of times of movement, from verification result storage unit 902.

In addition, in the present embodiment, the verification processing selecting unit 105 acquires attributes different from the attributes included in the personal information read from the identification ID by the personal information reading unit 102, from the captured image stored in the waiting person image storage unit 901. Then, the verification processing selecting unit 105 selects an algorithm for an attribute combining the attributes acquired from the captured image stored in the waiting person image storage unit 901 and the attributes included in the personal information read from the identification ID, from the verification processing database 104. Incidentally, the verification processing database 104 stores in advance the algorithm for the attribute combining the attributes acquired from the captured image stored in the waiting person image storage unit 901 and the attributes included in the personal information read from the identification ID. Thus, the person verification processing is executed in accordance with the algorithm more suitable for the person verification processing for each target person TP, so that the person verification processing can be efficiently performed. Here, the attributes acquired from the captured image stored in the waiting person image storage unit 901 include the attributes of the waiting person that are changed depending on facial expression of the waiting person and aging of the waiting person, such as presence of the beard, and length of the forelock of the waiting person.

In this way, with the person verification system according to the third embodiment, time can be reduced required for the person verification processing.

As described above, with the first to third embodiments, the person verification processing can be efficiently performed.

Incidentally, the program executed by the person verification system of the present embodiments is provided by being incorporated in advance in read only memory (ROM) or the like.

The program executed in the person verification system of the present embodiments may be provided by being recorded in a computer readable recording medium such as a CD-ROM, flexible disk (FD), CD-R, or digital versatile disk (DVD), in an installable format file or an executable format file.

Further, the program executed in the person verification system of the present embodiments may be provided by being stored on a computer connected to a network such as the Internet, and being downloaded via the network. In addition, the program executed by the person verification system of the present embodiments may be provided or distributed via the network such as the Internet.

The program executed by the person verification system of the present embodiments has a module configuration including each unit described above (the verification processing selecting unit 105, the verification unit 106, the communication unit 108, the target person imaging control unit 501, and the waiting person imaging control unit 502). As actual hardware, the central processing unit (CPU) reads the program from the ROM and executes the program and then each unit described above is loaded on the main storage device, and the verification processing selecting unit 105, the verification unit 106, a part of the communication unit 108, a part of the target person imaging control unit 501, a part of the waiting person imaging control unit 502 are generated on the main storage device.

While several embodiments of the present invention have been described, these embodiments have been presented as examples and are not intended to limit the scope of the invention. These novel embodiments can be implemented in various other forms, and various omissions, substitutions, and modifications are possible without departing from the spirit of the invention. These embodiments and modifications thereof are included in the scope and gist of the invention, and included in the scope of the invention described in the claims and the equivalent thereof.

## Claims

1. A person verification system (10, 10A, 10B) comprising:
an imaging unit (101) provided to be capable of imaging a target person (TP) trying to pass through a first gate (11);
a reading unit (102) provided to be capable of reading personal information including an image of a person indicated by identification (ID) and attributes of the person, from the identification (ID) held by the target person (TP);
a storage unit (104) for storing an algorithm for each of the attributes, the algorithm including processing for calculating a degree of similarity between a captured image obtained by imaging the target person (TP) and the image included in the personal information, for each of the attributes of the person;
a selecting unit (105) for selecting the algorithm for each of the attributes included in the personal information read, from the storage unit (104);
a determination unit (106) for executing person verification processing that calculates the degree of similarity between the captured image obtained by imaging by the imaging unit (103) and the image included in the personal information read, in accordance with the algorithm selected, determines that the target person (TP) is the person indicated by the identification (ID) when the degree of similarity calculated is equal to or greater than a predetermined threshold, and determines that the target person (TP) is not the person indicated by the identification (ID) when the degree of similarity calculated is less than the threshold.

2. The person verification system (10, 10A, 10B) according to claim 1, wherein the selecting unit (105) repeats the predetermined number of times selection of the algorithm that is the algorithm for each of the attributes included in the personal information read and different from the algorithm selected, from the storage unit (104), until it is determined that the target person (TP) is the person indicated by the identification, when it is determined that the target person (TP) is not the person indicated by the identification.

3. The person verification system (10, 10A, 10B) according to claim 2, wherein the first gate (11) is closed when the degree of similarity calculated is less than the threshold after the selection of the algorithm is repeated the predetermined number of times.

4. The person verification system (10, 10A, 10B) according to claim 2 or claim 3, further comprising a display unit (107), wherein
the display unit (107) displays information for prompting movement to another gate (12) when the degree of similarity calculated is less than the threshold after the selection of the algorithm is repeated the predetermined number of times.

5. The person verification system (10, 10A, 10B) according to any one of claims 2 to 4, further comprising a communication unit (108) for receiving the number of persons waiting for person verification at a second gate (12) other than the first gate (11), from an external device, wherein
the selecting unit (105) reduces the predetermined number of times or increases the threshold when the number of persons received is less than the number of persons waiting for the person verification at the first gate (11).

6. The person verification system (10, 10A, 10B) according to any one of claims 1 to 5, wherein the determination unit (106) stops the person verification processing and determines that the target person (TP) is not the person indicated by the identification when the degree of similarity calculated is less than a reference value less than the threshold by a predetermined value.

7. The person verification system (10, 10A, 10B) according to any one of claims 2 to 6, further comprising a target person imaging control unit (501), wherein
the determination unit (106) calculates an evaluation value indicating whether an imaging condition is suitable for imaging the target person (TP), based on the captured image of the person obtained by imaging by the imaging unit (101), and the target person imaging control unit (501) changes the imaging condition of the target person (TP) of the imaging unit, based on the evaluation value calculated.

8. The person verification system (10, 10A, 10B) according to claim 7, wherein
the imaging unit (101) includes a lighting device, and
the target person imaging control unit (501)rotates and/or moves the lighting device to change the imaging condition.

9. The person verification system (10, 10A, 10B) according to claim 7 or claim 8, wherein
the imaging unit (101) further includes a camera platform that is capable of changing the position or orientation of the target person imaging unit (101) and the imaging condition is changed by the camera platform.

10. The person verification system (10, 10A, 10B) according to claim 7, wherein
the imaging unit (101) includes multiple cameras, each of the multiple cameras differs mutually in a position and orientation thereof, and the imaging condition is changed by selecting one camera for use in imaging from the multiple cameras.

11. A person verification method comprising:
imaging a target person (TP);
reading personal information including an image of a person indicated by identification (ID) and attributes of the person, from the identification (ID) held by the target person (TP);
selecting an algorithm for each of the attributes included in the personal information read, from a storage unit (104) for storing the algorithm for each of the attributes, the algorithm including processing for calculating a degree of similarity between a captured image obtained by imaging the target person and the image included in the personal information, for each of the attributes of the person; and
executing person verification processing that calculates the degree of similarity between the captured image and the image included in the personal information read, in accordance with the algorithm selected, determines that the target person (TP) is the person indicated by the identification (ID) when the degree of similarity calculated is equal to or greater than a predetermined threshold, and determines that the target person (TP) is not the person indicated by the identification (ID) when the degree of similarity calculated is less than the threshold.

12. The person verification method according to claim 11, further comprising repeating the predetermined number of times selection of the algorithm that is the algorithm for each of the attributes included in the personal information read and different from the algorithm selected, from the storage, until it is determined that the target person (TP) is the person indicated by the identification (ID), when it is determined that the target person (TP) is not the person indicated by the identification (ID).

13. The person verification method according to claim 12, further comprising closing a first gate (l1) through which the target person (TP) trying to pass when the degree of similarity calculated is less than the threshold after the selection of the algorithm is repeated the predetermined number of times.

14. The person verification method according to claim 12 or claim 13, further comprising displaying information for prompting movement to another gate (12) on a display (107) when the degree of similarity calculated is less than the threshold after the selection of the algorithm is repeated the predetermined number of times.

15. The person verification method according to any one of claims 12, 13 and 14, further comprising receiving the number of persons waiting for person verification at a second gate (12) other than the first gate (11), from an external device, and
reducing the predetermined number of times or increasing the threshold when the number of persons received is less than the number of persons waiting for the person verification at the first gate.
